# EUROPÄISCHE PATENTANMELDUNG

(11) **EP 2 824 568 A1**
(43) Veröffentlichungstag der Anmeldung: **14.01.2015**
(21) Anmeldenummer: 13176088.6
(22) Anmeldetag: 11.07.2013
(51) Int. Cl.: G06F 9/44, G06F 17/22

(54) **Verfahren zur Erkennung und Darstellung von Unterschieden zwischen Versionen zellenbasierter grafischer Programme**

(71) Anmelder: SCHNEIDER ELECTRIC AUTOMATION GMBH, 97828 Marktheidenfeld (DE)
(72) Erfinder: Devaraja, Deepak, 63741 Aschaffenburg (DE)
(74) Vertreter: Stoffregen, Hans-Herbert

(57) **Zusammenfassung**

Die Erfindung bezieht sich auf ein Verfahren zur Erkennung und Darstellung von Unterschieden zwischen zwei in einer zellenbasierten Programmiersprache wie Kontaktplan (Ladder Diagram; LD) oder Ablaufsprache (Sequential Function Chart; SFC) erstellten Programmen (GP1, GP2), wobei die grafischen Programme (GP1, GP2) eine Spalten (S1...S11) und Zeilen (Z1...Z4) aufweisende Zellenstruktur haben, wobei Zellen (Z1.1...Z11.4) der Zellenstruktur jeweils ein grafisches Element (GE1.1...GE11.4) wie Spule, Kontakt oder Verbindung gegebenenfalls mit einer Variablen (V1.1...V11.4) zugeordnet ist. Das Verfahren umfasst die Verfahrensschritte: Transformation der zellenbasierten grafischen Programme (GP1, GP2) in jeweils einen strukturierten Text (ST1, ST2); Abbildung der grafischen Elemente (G1.1...G11.4) einer Zeile (Z1...Z4) oder einer Spalte (S1...S11) des grafischen Programms (GP1, GP2) in korrespondierende Text-Symbole (TS1.1...TS11.4) jeweils einer Zeile (TZ1...TZ4) eines strukturierten Textes (ST1, ST2); Erzeugen jeweils eines strukturierten Vergleichs-Textes (SVT1, SVT2) durch Vergleich der strukturierten Texte (ST1, ST2) mittels eines Text-Vergleichs-Algorithmus; Kennzeichnung von Unterschieden in den erzeugten strukturierten Vergleichs-Texten (SVT1, SVT2) bezogen auf die jeweiligen strukturierten Texte (ST1, ST2); grafische Darstellung der strukturierten Vergleichs-Texte (SVT1, SVT2) als zellenbasierte grafische Vergleichs-Programme (GVP1, GVP2) mittels eines Display-Tools (DT), wobei Text-Symbole (TS1.1 ... TS 11.4) sowie Text-Vergleichs-Symbole (TVS1, TVS2) jeweils einer Zeile (TZ1...TZ4) der strukturierten Vergleichs-Texte (SVT1, SVT2) sequentiell ausgelesen und als korrespondierende grafische Vergleichs-Elemente (GVE1, GVE11.4), gegebenenfalls mit Variablen, in Zellen jeweils einer Zeile (Z1...Z4) oder Spalte (S1...S11) des zellenbasierten grafischen Vergleichs-Programms (GVP1, GVP2) dargestellt werden.

## Beschreibung

Die Erfindung bezieht sich auf ein Verfahren zur Erkennung und Darstellung von Unterschieden zwischen zwei in einer zellenbasierten Programmiersprache wie Kontaktplan (Ladder Diagram; LD) oder Ablaufsprache (Sequential Function Chart; SFC) erstellten Programmen, wobei die grafischen Programme eine Spalten und Zeilen aufweisende Zellenstruktur haben, wobei Zellen der Zellenstruktur jeweils ein grafisches Element wie Spule, Kontakt oder Verbindung gegebenenfalls mit einer Variablen zugeordnet ist.

In dem Prospekt "Unity Dif - A SoCollaborative Software User Manual", 07/2012, www.schneider-electric.com, ist ein Verfahren zur Erkennung und Darstellung von Unterschieden zwischen zumindest zwei IEC 61131-Programmen des gleichen Typs beschrieben.

Unity Dif 7.0 ist ein Software-Tool zum Vergleich von IEC 61131 Programmen, die in IEC 61131 Programmiersprachen wie Kontaktplan (Ladder Diagram; LD), Ablaufsprache (Sequential Function Chart; SFC), strukturierter Text (Structured Text; ST), Anweisungsliste (Instruction List; IL) oder Funktionsbausteinsprache (Funktion Block Diagram; FBD) erstellt sind.

Bei dem bekannten Verfahren werden zellenbasierte grafische Programme auf der Basis von Projekt-Dateien vergleichen, die aus den Programmen abgeleitet sind. Eine Projekt-Datei kann beispielsweise eine Text-Datei wie XML-Datei sein. Zellenbasierte grafische Programme wie LD-Programme oder SFC-Programme nutzen eine Zellenstruktur, durch welche die grafische Darstellung des Programms in Spalten und Zeilen unterteilt wird. Die zugrunde liegenden Programmiersprachen sind zellenorientiert, was bedeutet, dass nur genau ein Element in jeder Zelle platziert werden kann. Eine LD-Zellenstruktur kann beispielsweise 11 bis 24 Spalten und 17 bis 2.000 Zeilen umfassen.

Der Vergleich der Projekt-Dateien wird für jede Zeile durchgeführt. Dabei wird jede Zeile mit einem Bezeichner "Typeline" in der Text-Datei abgespeichert. Wenn eine neue Zeile zugeführt, gelöscht oder modifiziert wird, wird dies in der Vergleichs-Text-Datei als "Typeline" hinzugefügt, gelöscht oder modifiziert dargestellt. Alle Zellen jeder Zeile werden miteinander verglichen.

Folglich wird der Vergleich der zellenbasierten grafischen Steuerungsprogramme auf der Grundlage von zwei Textdateien wie XML-Dateien durchgeführt, wobei das Ergebnis des Vergleichs in einer Vergleichs-Text-Datei dargestellt wird. Die Vergleichs-Text-Datei muss von einem Anwender textuell ausgewertet werden, was zumeist mühsam und zeitaufwendig ist. Die Ergebnisse des Vergleichs sind nur schwierig nachvollziehbar, da in einer Text-Vergleichs-Datei lediglich die Anzahl der Elemente angezeigt wird, die modifiziert, hinzugefügt oder gelöscht wurden und keine Unterstützung dahingehend angeboten wird, die eigentlichen Änderungen schnell und zuverlässig zu identifizieren. Eine grafische Darstellung von strukturellen Änderungen oder Unterschieden der grafischen Programme erfolgt nicht.

Zudem sind textbasierte Vergleichsverfahren mit sogen. DIFF-Programmen mit Problemen verbunden oder besitzen Einschränkungen im Hinblick auf die auswertbaren IEC 61131- Programme.

Davon ausgehend liegt der vorliegenden Erfindung die Aufgabe zu Grunde, ein Verfahren der eingangs genannten Art derart weiterzubilden, dass sowohl Textänderungen als auch strukturelle Änderungen eines zellenbasierten grafischen Programms sicher und zuverlässig erkannt werden.

Die Aufgabe wird erfindungsgemäß durch dein Verfahren mit folgenden Verfahrensschritten gelöst:
- Transformation der zellenbasierten grafischen Programme in jeweils einen strukturierten Text ;
- Abbildung der grafischen Elemente einer Zeile oder einer Spalte des grafischen Programms in korrespondierende Text-Symbole jeweils einer Zeile eines strukturierten Textes ;
- Erzeugen jeweils eines strukturierten Vergleichs-Textes durch Vergleich der strukturierten Texte mittels eines Text-Vergleichs-Algorithmus,
- Kennzeichnung von Unterschieden in den erzeugten strukturierten Vergleichs-Texten bezogen auf die jeweiligen strukturierten Texte ,
- grafische Darstellung der strukturierten Vergleichs-Texte als zellenbasierte grafische Vergleichs-Programme mittels eines Display-Tools , wobei Text-Symbole sowie Text-Vergleichs-Symbole jeweils einer Zeile der strukturierten Vergleichs-Texte sequentiell ausgelesen und als korrespondierende grafische Vergleichs-Elemente gegebenenfalls mit Variablen, in Zellen jeweils einer Zeile oder Spalte des zellenbasierten grafischen Vergleichs-Programms dargestellt werden.

Dem erfindungsgemäßen Verfahren liegt der Gedanke zu Grunde, ein zellenbasiertes grafisches Programm, wie Ladder Diagram (LD) oder Sequential Function Chart (SFC) als Textdatei zu interpretieren.

Darstellungen von zellenbasierten grafischen Programmen umfassen eine Zeilen und Spalten aufweisende Struktur von Zellen, wobei jeder Zelle ein grafisches Element ggf. mit einer Variablen zugeordnet ist. Die grafischen Elemente der Zellen einer Zeile oder Spalte des zellenbasierten grafischen Programms werden mittels eines Transformations-Tools sequentiell ausgelesen und in korrespondierende Text-Symbole jeweils einer Zeile eines strukturierten Textes abgebildet. Dieser erste strukturierte Text kann anschließend mit einem weiteren, zweiten strukturierten Text, der von einer Version des zellenbasierten grafischen Programms abgeleitet wurde, unter Verwendung von an sich bekannten Text-Vergleichs-Algorithmen verglichen werden.

Aus dem Vergleich resultieren strukturierte Vergleichs-Texte, die mittels eines Display-Tools jeweils als zellenbasiertes grafisches Vergleichs-Programm angezeigt werden, wobei die Text-Vergleichs-Elemente einer Zeile des strukturierten Vergleichs-Textes sequentiell ausgelesen und korrespondierende grafische Vergleichs-Elemente, ggfs. mit Vergleichs-Variablen, einer Zeile oder Spalte des zellenbasierten grafischen Vergleichs-Programms dargestellt werden. Die zueinander korrespondierenden Text/Grafik-Elemente sind in einer Referenz-Tabelle abgespeichert. Markierte Textänderungen des Vergleichs-Textes werden vorzugsweise farblich gekennzeichnet.

Mit anderen Worten: es wird ein struktureller Vergleich von zellenbasierten grafischen IEC-Sprachen unter Verwendung einer Text-Vergleich-Strategie durchgeführt, wobei grafische Elemente der Zellen der zellenbasierten IEC-Sprachen auf korrespondierende Text-Symbole abgebildet werden, um korrespondierende Dateien in Textform zu generieren, die mittels eines Text-Vergleichs-Algorithmus verglichen werden können.

Das erfindungsgemäße Verfahren bietet somit ein Vergleichs-Tool zum Vergleich von zwei zellenbasierten, in der gleichen IEC-Sprache verfassten grafischen IEC-Programmen, an, wobei das Ergebnis des Vergleichs eine einfache Identifizierung jeglicher Änderungen der Struktur als auch der Inhalte von Zellen erlaubt, die in einem der Programme vorgenommen wurden.

Eine logische Interpretation des LD-Codes eines Programms wird bei der Suche nach strukturellen Unterschieden in zwei Versionen des Codes nicht hilfreich sein. Eine strukturelle Veränderung kann einfach sein wie z.B. eine neu eingefügte Zeile, oder so komplex wie eine ähnliche Logik-Sequenz, d.h. eine gleiche Sequenz von LD Elementen wird wieder hinzugefügt, die sich mehrfach in dem Code wiederholt. Somit ist es nicht möglich herauszufinden, welches der neu hinzugefügte Code ist.

Gemäß einer bevorzugten Ausführungsform ist bei dem Vergleich von LD-Programmen vorgesehen, dass jede Zeile eines LD-Programms als eine Zeile des strukturierten Textes abgebildet wird, wobei jedes grafische Element einer Zeile als ein Text-Element in einer Zeile des strukturierten Textes interpretiert wird. Auf der Grundlage der strukturierten Textdateien wird ein Textvergleich durchgeführt. Die Text-Symbole der strukturierten Texte werden durch eine Rücktransformation in korrespondierende grafische Elemente der jeweiligen LD-Programme umgewandelt und mittels eines Display-Tools als zellenbasierte grafische LD-Programme auf einem Display angezeigt. Auf diese Weise können strukturelle Änderungen grafisch dargestellt, insbesondere farblich markiert werden.

Eine weitere beforzugte Verfahrensweise zeichnet sich dadurch aus, dass die Transformation das sequentielle Auslesen der grafischen Elemente der Zellen einer Zeile oder Spalte des zellenbasierten grafischen Programms mittels eines Text-Transformations-Tools umfasst.

Die Transformation kann vorzugsweise das sequentielle Auslesen einer die Programmstruktur der grafischen Elemente repräsentierenden Projekt-Datei als Text-Datei wie XML-Datei mittels eines Text-Transformations-Tools umfassen.

Vorzugsweise werden die in den strukturierten Vergleichs-Texten markierten Text-Vergleichs-Symbole in den grafisch dargestellten Vergleichs-Programmen zum Zweck einer guten Erkennbarkeit farblich markiert.

Bei einem Kontaktplan-Programm (LD-Programm) als zellenbasiertes grafisches Programm wird jedes grafische Element wie Spule, Kontakt, Verbindung in ein Text-Symbol einer Zeile des strukturierten Textes abgebildet, wobei die Reihenfolge der Zeilen sowie die Sequenz der grafischen Elemente einer Zeile erhalten bleiben.

Bei einem Ablauf-Programm (SFC-Programm) als zellenbasiertes grafisches Programm wird jedes der grafischen Elemente einer Spalte in ein Text-Symbol einer Zeile des strukturierten Textes abgebildet, wobei die Reihenfolge der Spalten sowie die Sequenz der grafischen Elemente einer Spalte erhalten bleiben.

Vorzugsweise werden bei dem Vergleich der strukturierten Texte zwei strukturierte Vergleichs-Texte erzeugt, wobei in einem ersten Vergleichs-Text Unterschiede bezogen auf den ersten strukturierten Text und in einem zweiten Vergleichs-Text Unterschiede zu dem zweiten strukturierten Text markiert werden.

Besonders bevorzugt werden die Unterschiede in Form von Hinzufügungen, Änderungen und Löschungen in den grafischen Darstellungen der zellenbasierten grafischen Vergleichs-Programmen (GVP1, GVP2) farblich markiert.

Als Text-Vergleichs-Algorithmus wird vorzugsweise ein LCS-Algorithmus verwendet.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der den Figuren zu entnehmenden bevorzugten Ausführungsbeispiels.

Es zeigen:
- Fig. 1: ein Blockschaltbild zur Durchführung des Verfahrens,
- Fig. 2: eine Darstellung eines zellenbasierten grafischen Programms am Beispiel eines LD-Programms,
- Fig. 3: eine das LD-Programm repräsentierende Text-Datei,
- Fig. 4a: eine erste Text-Vergleichs-Datei mit Änderungen korrespondierend zu einem ersten LD-Programm,
- Fig. 4b: eine zweite Text-Vergleichs-Datei mit Änderungen korrespondierend zu einem zweiten LD-Programm,
- Fig. 4c: eine grafische Darstellung des ersten Vergleichs-LD-Programms auf der Grundlage der ersten Text-Vergleichs-Datei und
- Fig. 4d: eine grafische Darstellung des zweiten Vergleichs-LD-Programms auf der Grundlage der zweiten Text-Vergleichs-Datei.

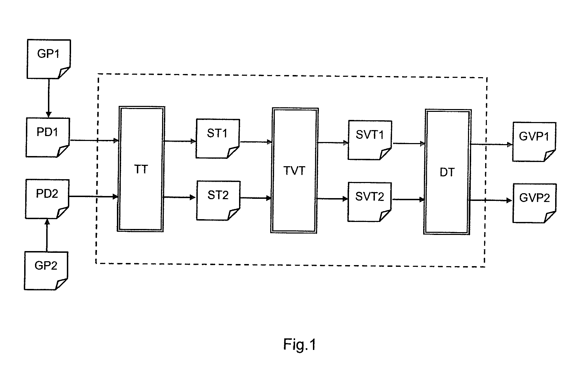

Fig. 1 zeigt ein Blockschaltbild eines Verfahrens zum Vergleich eines ersten zellenbasierten grafischen Programms GP1 mit einem zweiten zellenbasierten grafischen Programm GP2.

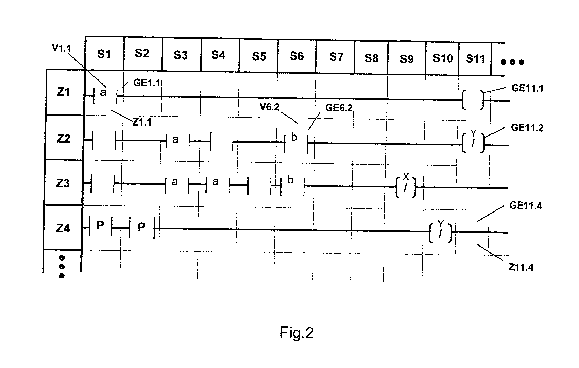

Gemäß Fig. 2 umfasst das grafische Programm GP1 eine aus Spalten S1 .... S11 und Zeilen Z1...Z4 gebildete Struktur aus Zellen Z1.1, Z2.1...11.4, wobei jeder Zelle ein grafisches Element GE1.1...GE11.4 ggfs. mit einer Variablen V1.1...V11.4 zugeordnet ist. Die grafischen Elemente GE1.1...GE11.4 repräsentieren funktionale Elemente wie Kontakte, Spulen oder Verbindungen z. B. eines LD-Programms.

Jedes der grafischen Programme GP1, GP2 wird durch jeweils eine Projekt-Datei PD1, PD2 beschrieben, die im vorliegenden Ausführungsbeispiel eine Text-Datei wie XML-Datei ist. Die Projekt-Datei enthält Informationen über die grafischen Elemente GE1.1 ... GE11.4 sowie deren Lage in der Zellenstruktur des grafischen Programms.

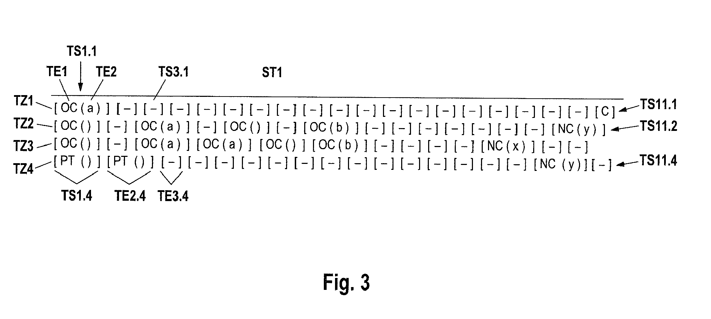

In einem ersten Verfahrensschritt werden die Projekt-Dateien PD1, PD2 mittels eines Transformations-Tools TT in jeweils einen strukturierten Text ST1, ST2 transformiert. Der aus der Projekt-Datei PD1 transformierte strukturierte Text ST1 ist in Fig. 3 dargestellt.

Gemäß der Erfindung werden die Projekt-Dateien PD1, PD2 sequentiell ausgelesen, so dass die grafischen Element GEI.1...GE11.1 der Zellen Z1.1... Z11.1 einer Zeile Z1...Z4 in korrespondierende Text-Symbole TS1.1... TS11.1 einer Zeile TZ1 ... TZ4 des strukturierten Textes ST1 abgebildet werden. Somit entspricht jede Zeile Z1...Z4 des grafischen Programms GP1 einer Zeile TZ1...TZ4 des strukturierten Textes ST1, ST2 und die Anzahl der Spalten S1...S11 des grafischen Programms GP1 entspricht der Anzahl der Text-Symbole TS1.1...TS11.1 einer Zeile TZ1...TZ4 des strukturierten Textes ST1.

Die Text-Symbole TS1.1...TS11.4 einer Zeile Z1...4 des strukturierten Textes ST1 sind durch Trennzeichen, im vorliegenden Beispiel durch eckige Klammern, voneinander getrennt. Die Text-Symbole TS1.1...TS11.4 umfassen ein erstes Text-Element TE1 wie "OC [open contact]" oder "NC [no contact]", durch welche die grafischen Elemente repräsentiert werden, sowie ggfs. ein zweites Text-Element TE2 zur Bezeichnung einer Variable wie z.B. die Buchstaben "a" oder "b". Daher haben die Text-Symbole folgende Struktur: [TE1(TE2)]; mit TE1 = "OC", "NC" oder "PT" und TE2 = "a" oder "b". Grafische Elemente, die eine Verbindung darstellen, werden z. B. durch das Text-Symbol [-] dargestellt.

Der strukturierte Text ST1 gemäß Fig. 3 zeigt, dass jedem grafischen Element GE1.1...GE11.4 einer Zelle Z1.1...Z11.4 des grafischen Programms GP1 ein korrespondierendes Text-Symbol TS1.1...TS11.4 zugeordnet ist, so dass die Programmstruktur des grafischen Programms GP1 in dem strukturierten Text ST1 beibehalten bleibt. Folglich entspricht die Anzahl und Reihenfolge der Zeilen Z1...Z4 der Anzahl und Reihenfolge der Zeilen TZ1...TZ4 des strukturierten Textes ST1 und die Sequenz der grafischen Elemente GE1.1...GE11.1 in einer Zeile des grafischen Programms GP1 entspricht der Sequenz der Text-Symbole TS1.1...TS11.4 in dem strukturierten Text ST1.

Entsprechend wird auch die Projekt-Datei PD2 des grafischen Programms GP2 in einen strukturierten Text ST2 transformiert.

Die strukturierten Texte ST1, ST2 werden in einem weiteren Verfahrensschritt mit Hilfe eines Text-Vergleichs-Tools TVT, wie beispielsweise eines auf dem LCS (Longest Common Subsequenz) Algorithmus basierenden DIFF-Programms miteinander verglichen.

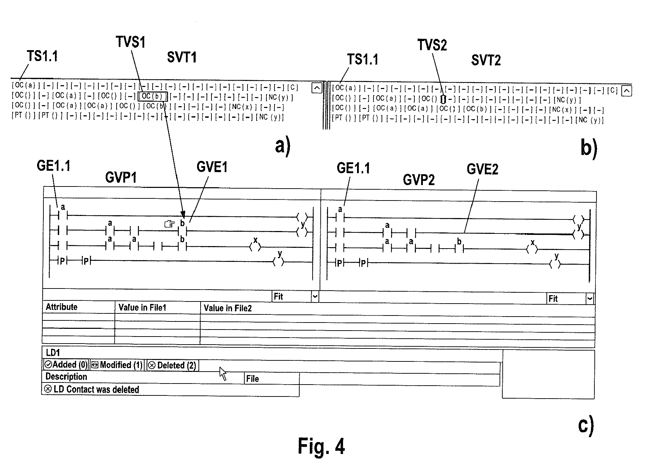

Das Ergebnis des Vergleichs ist ein erster strukturierter Vergleichs-Text SVT1 des strukturierten Textes ST1 sowie ein zweiter strukturierter Vergleichs-Text SVT2 des strukturierten Textes ST2, wobei in den strukturierten Vergleichs-Texten SVT1, SVT2 jeweils Unterschiede zu dem ursprünglich strukturierten Text ST1, ST2 durch Text-Vergleichs-Symbole TVS1, TVS2 dargestellt sind. Entsprechend strukturierte Text-Vergleichs-Symbole TVS1, TVS2 sind in Fig. 4a, b dargestellt.

In einem weiteren Verfahrensschritt werden die strukturierten Vergleichs-Texte SVT1, SVT2 mittels eines Display-Tools DT auf einem Display grafisch angezeigt, wobei jedem Text-Symbol TS1.1...TS11.1 und jedem Text-Vergleichs-Symbol TVS1, TVS2 einer Zeile TZ1...TZ4 des strukturierten Vergleichs-Textes SVT1, SVT2 ein grafisches Element GE1.1...GE11.4 bzw. ein grafisches Vergleichs-Element GVE1, GVE2 zugeordnet werden. Dabei ist vorgesehen, dass die grafischen Vergleichs-Elemente GVE1, GVE2 gegenüber den grafischen Elementen GE1.1...GE11.4 optisch wie farblich gekennzeichnet sind. Die Farbe der Kennzeichnung enthält eine Information über die durchgeführte Änderung wie z. B. hinzugefügt, geändert oder gelöscht

Im vorliegenden Beispiel wurde in dem grafischen Programm GP1 gemäß Fig. 2 in Zeile R2 und Spalte S6, d. h. in Zelle 6.2 der Kontakt in Form des grafischen Elementes GE6.2 mit Variable V6.2 gelöscht und durch eine Verbindung ersetzt. Diese Änderung wird in dem strukturierten Vergleichs-Text SVT1 gemäß Fig. 4a als farblich markiertes, korrespondierendes Vergleichs-Text-Symbol TVS1 dargestellt. In der grafischen Darstellung des grafischen Vergleichs-Programms GVP1 wird das Vergleichs-Text-Symbol TVS1 als grafisches Vergleichs-Element GVE1 dargestellt und farblich z.B. in der Farbe Rot dargestellt, was bedeutet, dass der entsprechende Kontakt mit der zugehörigen Variablen gelöscht wurde. Dies wird auch textlich durch die Bemerkung "LD Contact was deleted" dargestellt.

In dem strukturierten Vergleichstext SVT2 wird die Löschung des Kontaktes GE6.2 als Text-Vergleichs-Symbol TVS2 in Form einer Verbindung dargestellt. Diese Verbindung wird in der Darstellung des grafischen Vergleichsprogramms GVP2 gemäß Fig. 4c als farblich markiertes grafisches Vergleichs-Element GVE2 angezeigt.

Somit wird das Ergebnis des Vergleichs, insbesondere strukturelle Unterschiede zwischen den grafischen Programmen GP1, GP2, in grafischer Form dargestellt. Auch können Vertauschungen von LD-Programmanweisungen, wie z.B. Änderungen in der Reihenfolge von Zeilen, Ergänzungen von Leerzeilen, Verschiebungen von Programmabschnitten usw. zuverlässig ermittelt und Abweichungen grafisch erkannt sowie analysiert werden.

Fig. 4c zeigt grafisch und auf anschauliche Weise die Unterschiede zwischen den grafischen zellbasierten Programmen GVP1, GVP2 als Ergebnis eines Vergleichs zwischen zwei strukturierten Text-Dateien ST1, ST2 mittels des Text-Vergleichs-Tools TVT. Zum Vergleich der strukturierten Vergleichs-Texte SVD1, SVD2 kann ein an sich bekannter Text-Vergleichs-Algorithmus verwendet werden, wobei jedoch das Ergebnis des Textvergleichs, nämlich die strukturierten Vergleichstexte SV1, SVT2 mittels des Display-Tools DT jeweils grafisch dargestellt werden. Das erfindungsgemäße Verfahren ermöglicht einen schnellen, einfachen und zuverlässigen Vergleich zwischen zwei zellbasierten, grafischen Programmen auf der Grundlage eines Text-Vergleichs-Algorithmus, wobei durch Rücktransformation der strukturierten Vergleichstexte SVT1, SVT2 in eine grafische Darstellung grafischer Vergleichsprogramme DVP1, DVP2 präzise Hinweise auf strukturelle Unterschiede grafisch bereitgestellt werden.

## Patentansprüche

1. Verfahren zur Erkennung und Darstellung von Unterschieden zwischen zwei in einer zellenbasierten Programmiersprache wie Kontaktplan (Ladder Diagram; LD) oder Ablaufsprache (Sequential Function Chart; SFC) erstellten Programmen (GP1, GP2), wobei die grafischen Programme (GP1, GP2) eine Spalten (S1...S11) und Zeilen (Z1...Z4) aufweisende Zellenstruktur haben, wobei Zellen (Z1.1...Z11.4) der Zellenstruktur jeweils ein grafisches Element (GE1.1...GE11.4) wie Spule, Kontakt oder Verbindung gegebenenfalls mit einer Variablen (V1.1...V11.4) zugeordnet ist,
umfassend die Verfahrensschritte
- Transformation der zellenbasierten grafischen Programme (GP1, GP2) in jeweils einen strukturierten Text (ST1, ST2);
- Abbildung der grafischen Elemente (G1.1...G11.4) einer Zeile (Z1...Z4) oder einer Spalte (S1...S11) des grafischen Programms (GP1, GP2) in korrespondierende Text-Symbole (TS1.1...TS11.4) jeweils einer Zeile (TZ1...TZ4) eines strukturierten Textes (ST1, ST2);
- Erzeugen jeweils eines strukturierten Vergleichs-Textes (SVT1, SVT2) durch Vergleich der strukturierten Texte (ST1, ST2) mittels eines Text-Vergleichs-Algorithmus,
- Kennzeichnung von Unterschieden in den erzeugten strukturierten Vergleichs-Texten (SVT1, SVT2) bezogen auf die jeweiligen strukturierten Texte (ST1, ST2),
- grafische Darstellung der strukturierten Vergleichs-Texte (SVT1, SVT2) als zellenbasierte grafische Vergleichs-Programme (GVP1, GVP2) mittels eines Display-Tools (DT), wobei Text-Symbole (TS1.1 ... TS 11.4) sowie Text-Vergleichs-Symbole (TVS1, TVS2) jeweils einer Zeile (TZ1...TZ4) der strukturierten Vergleichs-Texte (SVT1, SVT2) sequentiell ausgelesen und als korrespondierende grafische Vergleichs-Elemente (GVE1, GVE11.4), gegebenenfalls mit Variablen, in Zellen jeweils einer Zeile (Z1...Z4) oder Spalte (S1...S11) des zellenbasierten grafischen Vergleichs-Programms (GVP1, GVP2) dargestellt werden.

2. Verfahren nach Anspruch 1,
**dadurch gekennzeichnet,**
**dass** die Transformation das sequentielles Auslesen der grafischen Elemente (GE1.1...GE11.4) der Zellen (Z1.1...Z11.4) einer Zeile (Z1...Z4) oder Spalte (S1...S11) des zellenbasierten grafischen Programms (GP1, GP2) mittels eines Text-Transformations-Tools (TT) umfasst.

3. Verfahren nach Anspruch 1,
**dadurch gekennzeichnet,**
**dass** die Transformation das sequentielle Auslesen einer die Programmstruktur der grafischen Elemente (GE1.1...GE11.4) repräsentierenden Projekt-Datei (PD1, PD2) als Text-Datei wie XML-Datei mittels eines Text-Transformations-Tools (TT) umfasst.

4. Verfahren nach Anspruch 1,
**dadurch gekennzeichnet,**
**dass** die in den strukturierten Vergleichs-Texten (SVT1, SVT2) markierten Text-Vergleichs-Symbole (TVS1, TVS2) in den grafisch dargestellten Vergleichs-Programmen (GVP1, GVP2) zum Zweck einer guten Erkennbarkeit farblich markiert werden.

5. Verfahren nach Anspruch 1,
**dadurch gekennzeichnet,**
**dass** bei einem Kontaktplan-Programm (LD-Programm) als zellenbasiertes grafisches Programm jedes grafische Element (GE1.1...GE11.4) wie Spule, Kontakt, Verbindung in ein Text-Symbol (TS1.1..TS11.4) einer Zeile (TZ1...TZ4) des strukturierten Textes (ST1, ST2) abgebildet wird, wobei die Reihenfolge der Zeilen sowie die Sequenz der grafischen Elemente einer Zeile erhalten bleiben.

6. Verfahren nach zumindest einem der vorhergehenden Ansprüche,
**dadurch gekennzeichnet ,**
**dass** bei einem Ablauf-Programm (SFC-Programm) als zellenbasiertes grafisches Programm jedes der grafischen Elemente (GE1.1...GE1.4) einer Spalte (S1...S11) in ein Text-Symbol (TS1.1..TS11.4) einer Zeile (TZ1...TZ4) des strukturierten Textes (ST1, ST2) abgebildet wird, wobei die Reihenfolge der Spalten sowie die Sequenz der grafischen Elemente einer Spalte erhalten bleiben.

7. Verfahren nach zumindest einem der vorhergehenden Ansprüche,
**dadurch gekennzeichnet ,**
**dass** bei dem Vergleich der strukturierten Texte (ST1, ST2) zwei strukturierte Vergleichs-Texte (SVT1, SVT2) erzeugt werden, wobei in einem ersten Vergleichs-Text Unterschiede bezogen auf den ersten strukturierten Text und in einem zweiten Vergleichs-Text Unterschiede zu dem zweiten strukturierten Text markiert werden.

8. Verfahren nach zumindest einem der vorhergehenden Ansprüche,
**dadurch gekennzeichnet ,**
**dass** die Unterschiede in Form von Hinzufügungen, Änderungen und Löschungen in den grafischen Darstellungen der zellenbasierten grafischen Vergleichs-Programmen (GVP1, GVP2) farblich markiert werden.

9. Verfahren nach zumindest einem der vorhergehenden Ansprüche,
**dadurch gekennzeichnet ,**
**dass** als Text-Vergleichs-Algorithmus ein LCS-Algorithmus verwendet wird.
